# EUROPÄISCHE PATENTSCHRIFT

(11) **EP 1 091 993 B1**
(45) Veröffentlichungstag und Bekanntmachung des Hinweises auf die Patenterteilung: **22.05.2002**
(21) Anmeldenummer: 99932714.1
(22) Anmeldetag: 23.06.1999
(51) Int. Cl.: C08G 64/00

(54) **VERFAHREN ZUR HERSTELLUNG VON POLYCARBONATEN MIT TERMINALEN OH-GRUPPEN**
METHOD FOR PRODUCING COMPOUNDS WITH TERMINAL OH GROUPS
PROCEDE DE PREPARATION DE COMPOSES A GROUPES OH TERMINAUX

(30) Priorität: 02.07.1998 DE 19829593
(43) Veröffentlichungstag der Anmeldung: 18.04.2001
(73) Patentinhaber: Cognis Deutschland GmbH & Co. KG, 40589 Düsseldorf (DE)
(72) Erfinder: WESTFECHTEL, Alfred, D-40724 Hilden (DE); GRUETZMACHER, Roland, D-42489 Wülfrath (DE); GRUNDT, Elke, D-40589 Düsseldorf (DE)
(86) Internationale Anmeldenummer: EP9904351
(87) Internationale Veröffentlichungsnummer: WO0001755

(56) Entgegenhaltungen:
- EP-A- 0 798 328
- US-A- 4 463 141
- US-A- 4 891 421
- DATABASE WPI Section Ch, Week 198738 Derwent Publications Ltd., London, GB; Class A23, AN 1987-268370 XP002118890 & JP 62 187725 A (DAICEL CHEM IND LTD), 17. August 1987 (1987-08-17)
- PATENT ABSTRACTS OF JAPAN vol. 017, no. 704 (C-1146), 22. Dezember 1993 (1993-12-22) & JP 05 239201 A (KURARAY CO LTD), 17. September 1993 (1993-09-17)

## Beschreibung

### Gebiet der Erfindung

Die Erfindung betrifft ein Verfahren zur Herstellung von Verbindungen mit terminalen OH-Gruppen, wobei man Diole mit terminalen CH₂OH-Gruppen in Gegenwart eines Katalysators mit Dimethylcarbonat umsetzt, das dabei freigesetzte Methanol kontinuierlich abdestilliert und anschließend den eingesetzten Katalysator deaktiviert. Durch die Wahl spezieller Verfahrens- bzw. Stoffparameter wird erreicht, daß die entstehenden Produkte sich aufgrund ihres Eigenschaftsprofils ganz ausgezeichnet zur. Herstellung linearer Polyurethane eignen.

### Stand der Technik

Polyurethane (PUR) sind eine umfangreiche Gruppe von Polymeren sehr unterschiedlicher Zusammensetzung mit vielfältigem Eigenschaftsbild. Allen Polyurethanen gemeinsam ist das Aufbauprinzip, daß sie nach dem Diisocyanat-Polyadditionsverfahren hergestellt werden. Charakteristisch für diese Verbindungen sind Urethangruppen -NH-CO-O-, die durch Polyaddition von Hydroxy-Verbindungen, meist Diolen oder Polyolen, an die -NCO-Gruppen von di- bzw. polyfunktionellen Isocyanaten entstehen. In den meisten Fällen verknüpft die Urethangruppe Polyalkylenether- und/oder Polyestersequenzen, die ihrerseits Molekularmassen zwischen etwa 200 und 6000 aufweisen. Polyurethane sind im Handel zum Beispiel als Schaumstoffe, thermoplastische Granulate, Lösungen, wäßrige Dispersionen und in Form von Prepolymeren erhältlich.

Aus Polyurethanen werden beispielsweise herstellt: Hochelastische Schaumstoffe (Matratzen, Polster, Autositze), Hartschaumstoffe (Isoliermaterialien), harte und flexible Formteile mit kompakter Außenhaut (Fensterrahmen, Gehäuse, Skier, Autostoßfänger, Front- und Heckteile, Lenkräder, Schuhsohlen) technische Formteile hoher Elastizität und Härte, Skischuhe, Folien, Blasformteile, Autostoßfänger, Druckwalzen, Lacke, Klebstoffe, Textilbeschichtungen, Hochglanz-Papierbeschichtungen, Lederfinisches, Elastomerfäden, Wollausrüstungsmittel usw. Zahl und Umfang der Anwendungsgebiete wachsen ständig. Über Herstellung, Eigenschaften, Technologie und Anwendung von Polyurethanen liegen zahlreiche Monographien und Übersichtsartikel vor. Beispielhaft sei hier verwiesen auf: **Gerhard W. Becker (Herausgeber) "Kunststoff-Handbuch - 7. Polyurethane" 3. Auflage 1993, Seiten 455-467 sowie 508 und 510-512.**

Eine besondere Bedeutung haben in jüngster Zeit sogenannte lineare Polyurethane erlangt. Diese Gruppe von Verbindungen ist erhältlich, indem man Diole mit terminalen CH₂OH-Gruppen mit Diisocyanaten umsetzt, wobei im wesentlichen linear aufgebaute Polyurethane entstehen. Zu den attraktivsten Verbindungen mit terminalen CH₂OH-Gruppen, die zur Herstellung von linearen Polyurethanen eingesetzt werden, zählen Polycarbonat-Copolyether-Diole und/oder Polycarbonat-Copolyester-Diole. Es handelt sich dabei um Verbindungen, die man üblicherweise durch Umsetzung von Verbindungen wie Phosgen, Diphenylcarbonat, Dimethylcarbonat und dergleichen mit Diolen wie Diethylenglykol, Triethylenglykol, Tetraethylenglykol, 1,6-Hexandiol, Polyethylenglykol, Dipropylenglykol, Tripropylenglykol, Polypropylenglykol, Polytetrahydrofuran und dergleichen bzw. deren Ethylenoxid- bzw. Propylenoxid-Adukte erhält.

Aus **US 4 463 141** sind Polyethercarbonatdiole bekannt, die durch Verknüpfung von Bausteinen eines Poly(tetramethylenether)glycols mit einem Dialkylcarbonat, einem cyclischen Carbonat oder Phosgen zugänglich sind. Im Hinblick auf den Einsatz von Dialkylcarbonaten als Baustein zum Aufbau des gewünschten Diols wird ausgesagt, daß Dimethyl- und Diethylcarbonat bevorzugt sind. Die Reaktionen werden in Gegenwart von üblichen Umesterungskatalysatoren durchgeführt, wobei Tetrabutyltitanat bevorzugt ist. Im Hinblick auf die Parameter, die bei der Durchführung der Reaktion zu beachten sind, wird offenbart, daß die Reaktion üblicherweise in einem Temperaturbereich von 120 bis 240 °C und atmosphärischem Druck durchgeführt wird. Dabei wird insbesondere das Carbonat zu dem als Ausgangsstoff eingesetzten Glykol langsam, und zwar über einen Zeitraum von 5 bis 20 Stunden, zudosiert. Der im Zuge der Reaktion als Nebenprodukt entstehende Alkohol kann gemäß der Lehre der US 4 463 141 entweder durch Verdampfung oder durch Durchspülen der Reaktionszone mit Stickstoff entfernt werden. Die Einstellung des gewünschten Molekulargewichts des herzustellenden Diols wird gemäß der Lehre der US 4 463 141 dadurch realisiert, daß man während der Reaktion ständig Proben aus der Reaktionszone entnimmt und analysiert und zu dem Zeitpunkt, bei dem das gewünschte Molekulargewicht erreicht ist, den Katalysator durch übliche Methoden, insbesondere durch Zugabe von Phosphorsäure, deaktiviert. Als beste Ausführungsform offenbart US 4 463 141 im Beispiel 1 die Umsetzung eines Polytetrahydrofurans mit einem Molekulargewicht von 650 in Gegenwart von Tetrabutyltitanat mit Diethylcarbonat. Die Mischung wird bei einer Temperatur im Bereich von 210 bis 240 °C (die Angaben beziehen sich auf atmosphärischen Druck) erhitzt und das bei der Reaktion entstehende Ethanol durch Destillation entfernt. Nach Abschluß der Reaktion wird der Katalysator durch Zugabe von 85%-iger Phosphorsäure deaktiviert.

Die europäische Patentanmeldung **EP-A-335 416** bezieht sich auf modifizierte Polyoxytetramethylenglykole mit einem niedrigen Schmelzpunkt und guter Wiederstandsfähigkeit sowie einem Verfahren zu seiner Herstellung. Gegenstand dieser Anmeldung sind solche modifizierten Polyoxytetramethylenglykle, die eine Hauptkette mit sich wiederholenden Struktureinheiten aufweisen, wobei als Strukturelemente zum einen eine Polyoxytetramethylengruppe der Formel - [O(CH₂)₄]_{*n*} -, wobei n eine Zahl im Bereich von 3 bis 28 ist, und eine Dioxycarbonylgruppe enthalten ist, wobei das erstgenannte Strukturelement 75,5 bis 99,3 Mol-% und das letztgenannte Strukturelement 24,5 bis 0,7 Mol-% ausmacht.

Die europäische Patentanmeldung **EP-A-442 402** betrifft Polyetherpolycarbonatdiole, die im wesentlichen aufgebaut sind aus
a) 3 bis 63,7 Mol-% an Einheiten, die sich von Polyoxytetramethylendiol ableiten,
b) 63,7 bis 3 Mol-% an Einheiten, die sich von einem von a) verschiedenen Polyoxyalkylendiol ableiten und die C₂₋₈-Alkylengruppen, ein aliphatisches Alkandiol mit 2 bis 14 C-Atomen, ein alicyclisches Alkandiol mit 3 bis 14 C-Atomen oder ein Alkylenoxid mit 2 oder 3 C-Atomen oder deren Mischungen enthalten und
c) 33,3 bis 50 Mol-% an Einheiten, die sich ableiten von Phosgen, einem Dialkylcarbonat mit C₁₋₄-Alkylgruppen, einem cyclischen Carbonat mit C₂₋₄-Alkylengruppen oder deren Mischungen.

Die europäische Patentanmeldung **EP-A-798 327** betrifft ein 2-stufiges Verfahren zur Herstellung von Polycarbonat-Copolyether-Diolen. Dies geschieht im wesentlichen wie folgt: Zunächst setzt man eines oder mehrere Diole (Polyetherglykole, PEG) mit Dimethylcarbonat bei Temperaturen zwischen 90 und 120 ° in Gegenwart eines basischen Katalysators, der ausgewählt ist aus der Gruppe der Oxide, Hydroxide, Carbonate oder Alkoholate eines Alkali- oder Erdalkalimetalls (z.B. Natriummethylat), um. Die Umsetzung wird bei einem molaren Verhältnis Dimethylcarbonat/PEG zwischen 2 und 12 durchgeführt, das heißt Dimethylcarbonat wird im Überschuß eingesetzt. Das erhaltene Zwischenprodukt wird anschließend in einer zweiten Stufe, nachdem zuvor der in der ersten Stufe eingesetzte Katalysator und das dort eingesetzte überschüssige Dimethylcarbonat entfernt worden sind, durch Umsetzung mit einem gewünschten Polyetherglykol bei 140 bis 185 ° und Atmosphärendruck in Gegenwart eines Lösungsmittels und eines Organometallkatalysators, der aus Zinn-, Blei-, Titan-, Zirkonium-, und Antimon-Verbindungen ausgewählt ist und der in Konzentrationen zwischen 0,0001 bis 0,001 Gew.-% eingesetzt wird, in das Endprodukt überführt. Bei dieser zweiten Reaktionsstufe handelt es sich um eine klassische Umesterungsreaktion, bei der die Methoxy-Endgruppen des Zwischenproduktes durch PEG-Endgruppen ersetzt werden.

Gemäß Seite 5, Zeilen 43 - 44 der EP-A-798 327 wird der in der zweiten Stufe eingesetzte Katalysator neutralisiert. Dazu werden entweder eine hydrothermale Behandlung oder der Einsatz eines Reagens empfohlen, das in der Lage ist, die Metallionen des Katalysators zu binden. Im letztgenannten Fall ist konkret in Zeile 48 bis 50 ausgeführt, daß dabei insbesondere organische Säuren oder Mineralsäuren wie Phosphorsäure oder Polyphosphorsäure eingesetzt werden können. Über eine spezielle Darreichungs- bzw. Angebotsform der zur Katalysator-Deaktivierung eingesetzten Säure ist jedoch in der EP-A- 798 327 nichts offenbart.

**EP-A-798 328** beschreibt ein Verfahren zur Herstellung von Polycarbonat-Copolyether-Polyolen. Dabei handelt es sich um ein 1-stufiges Verfahren. Die wesentlichen Verfahrensparameter sind dabei wie folgt:
1) Einsatz von Dimethylcarbonat (DMC)
2) Einsatz von ein oder mehreren Polyetherdiolen
3) Einsatz von ein oder mehreren Polyetherdiolen mit MG = 100 bis 200
4) molares Verhältnis Dimethylcarbonat/Polyetherdiole = 0,5 bis 1,35
5) Temperatur = 130 bis 185 °C
6) Katalysator = Alkali- bzw. Erdalkali-Oxid, -Carbonat oder -Alkoholat oder Übergangsmetall-Verbindung (Metall der dritten bis fünften Gruppe),
wobei Komponente 3) Bestandteil der Komponente 2) ist und die Reaktion vorzugsweise in drei aufeinanderfolgenden "Phasen" durchgeführt wird, die unterschiedlichen Druckbedingungen entsprechen.

### Beschreibung der Erfindung

Aufgabe der vorliegenden Erfindung war es, ein verbessertes Verfahren zur Herstellung von Verbindungen mit terminalen OH-Gruppen bereitzustellen, die sich zur Herstellung von linearen Polyurethanen eignen und diesen Polyurethanen ein gutes Eigenschaftsprofil verleihen. Darunter wird insbesondere verstanden, daß diese Verbindungen mit terminalen OH-Gruppen sich im unten beschriebenen Gelzeit-Test dadurch auszeichnen, daß der Meßwert G2 sich vom Meßwert G1 maximal 20% - bezogen auf den Meßwert G1 - unterscheidet, was gleichbedeutend ist damit, daß die durch Umsetzung dieser Verbindungen mit Diisocyanaten hergestellten Polyurethane im wesentlichen linear aufgebaut sind und nur in untergeordnetem Maße Vernetzungen aufweisen.

Gegenstand der vorliegenden Anmeldung ist ein Verfahren zur Herstellung von Verbindungen mit terminalen OH-Gruppen, wobei man Diole mit terminalen CH₂OH-Gruppen in Gegenwart eines Katalysators mit Dimethylcarbonat umsetzt, das dabei freigesetzte Methanol kontinuierlich abdestilliert und anschließend den eingesetzten Katalysator deaktiviert. Das Verfahren ist dadurch charakterisiert, daß man
a) ein oder mehrere Diole mit terminalen CH₂OH-Gruppen zusammen mit einem Titan-haltigen Katalysator vorlegt und diese Mischung auf eine Temperatur im Bereich von 110 bis 160°C erhitzt,
b) bei dieser Temperatur Dimethylcarbonat kontinuierlich zudosiert, wobei man ein molares Verhältnis Dimethylcarbonat/Diol(en) im Bereich von 1,01:1 bis 5:1 einstellt und
c) das bei der Reaktion freigesetzte Methanol kontinuierlich abdestilliert, wobei man beim Abdestillieren ein molares Verhältnis Methanol/Dimethylcarbonat im Bereich von 0,5:1 bis 99:1 einstellt,
d) sobald kein Methanol mehr freigesetzt wird, auf eine Temperatur im Bereich von 190 bis 240 °C erhitzt und dann bei dieser Temperatur und einem Druck unterhalb von 100 mbar Methanol/Dimethylcarbonat entfernt
e) und schließlich den Katalysator durch Zugabe von 0,8 bis 2 Äquivalenten Phosphorsäure - bezogen auf den eingesetzten Katalysator - bei einer Temperatur im Bereich von 80 bis 120°C deaktiviert, wobei man die Phosphorsäure in Form einer 1 bis 20 Gew.-%igen wäßrigen Lösung einsetzt.

In einer Ausführungsform des erfindungsgemäßen Verfahrens dosiert man unmittelbar nach Schritt d) und vor Schritt e) weiteres Diol - dasselbe wie in a) - in einer molaren Menge zu, die auf die gewünschte einzustellende OHZ des Endproduktes berechnet ist und führt eine weitere Umesterung bei einer Temperatur im Bereich von 160 bis 240 °C durch. Dieser Schritt, der in den Gesamtablauf des erfindungsgemäßen Verfahrens unmittelbar nach Schritt d) und vor Schritt e) integriert ist, wird als Schritt ∗) bezeichnet.

Die Schritte a) bis d), *) und e) des erfindungsgemäßen Verfahrens sind im untenstehenden Ablaufschema nochmals schematisch dargestellt.

Bei dem erfindungsgemäßen Verfahren verbleibt der in Schritt a) eingesetzte Katalysator im Produkt und wird in Schritt e) deaktiviert. Diese Deaktivierung ist permanent. Darunter ist zu verstehen, daß der Katalysator auch bei längerer thermischer Belastung des Produktes nicht mehr reaktiviert wird. Dadurch wird sichergestellt, daß bei einem späteren Einsatz des Produktes zur Herstellung von insbesondere linearen Polyurethanen der bleibend deaktivierte Katalysator keine unerwünschten Vernetzungen oder Nebenreaktionen verursacht. Ein Maß für die Permanenz der Deaktivierung des Katalysators ist der unten näher beschriebene Gelzeit-Test. Die nach dem erfindungsgemäßen Verfahren erhältlichen Produkte zeichnen sich dadurch aus, daß sich im Gelzeittest der Meßwert G2 vom Meßwert G1 maximal um 20% - bezogen auf den Meßwert G1 - unterscheidet.

Es sei ausdrücklich festgestellt, daß die Werte für G1 und G2 nur im Bereich bis zu 300 Minuten zu bestimmen sind. Sofern für G1 und/oder G2 Werte oberhalb 300 Minuten festgestellt werden, so wird hierfür einfach ">300 min" angegeben. Bei Werten ">300 min" wird zur Berechnung wie groß die prozentuale Abweichung von G2 im Hinblick auf G1 ist, jeweils von 300 min ausgegangen.

Im Zuge des erfindungsgemäßen Verfahrens setzt man ein oder mehrere **Diole mit terminalen CH**_{**2**}**OH-Gruppen** ein. Für diese speziellen Verbindungen wird fortan der Einfachheit halber der Ausdruck "Diole" verwendet. Hinsichtlich des Molekulargewichts der Diole gilt an sich keinerlei Einschränkung. Diole mit einem mittleren Molekulargewicht (Zahlenmittel; Mn) im Bereich von 118 bis 1000 und insbesondere von 200 bis 600 sind jedoch bevorzugt.

In einer bevorzugten Ausführungsform wählt man die Diole aus der Klasse der Alkandiole, Polyetherdiole und Polyesterdiole.

Bei den **Alkandiolen** handelt es sich um Verbindungen der allgemeinen Struktur HOCH₂-R¹-CH₂OH, worin der Rest R¹ ein hydrophober Kohlenwasserstoffrest ist, der gesättigt oder ungesättigt, geradkettig oder verzweigt sein kann und gegebenenfalls auch aromatische Strukturelemente enthalten kann. Beispiele sind 1,6-Hexandiol, 1,7-Heptandiol und 1,8-Octandiol, ferner Polyoxytetramethylendiole - auch als Polytetrahydrofurane bekannt - sowie die sogenannten Dimerdiole.

**Dimerdiole** sind seit langem bekannte und im Handel erhältliche Verbindungen, die beispielsweise durch Reduktion von Dimerfettsäureestern gewonnen werden. Die diesen Dimerfettsäureestern zu Grunde liegenden Dimerfettsäuren sind Carbonsäuren, die durch Oligomerisierung ungesättigter Carbonsäuren, in der Regel Fettsäuren wie Ölsäure, Linolsäure, Erucasäure und dergleichen, zugänglich sind. Üblicherweise erfolgt die Oligomerisierung bei erhöhter Temperatur in Gegenwart eines Katalysators aus etwa Tonerde. Die dabei erhaltenen Substanzen - Dimerfettsäuren technischer Qualität - stellen Gemische dar, wobei die Dimerisierungsprodukte überwiegen. Jedoch sind auch geringe Anteile höherer Oligomerer, insbesondere die Trimerfettsäuren, enthalten. Dimerfettsäuren sind handelsübliche Produkte und werden in verschiedenen Zusammensetzungen und Qualitäten angeboten. Zu Dimerfettsäuren existiert eine reichhaltige Literatur. Beispielhaft seien hier folgende Artikel zitiert: **Fette & Öle 26 (1994), Seiten 47-51; Speciality Chemicals 1984 (Mai-Heft), Seiten 17,18, 22-24.** Dimerdiole sind in der Fachwelt gut bekannt. Beispielhaft sei hierzu auf einen jüngeren Artikel verwiesen, in dem unter anderem Herstellung, Struktur und Chemie der Dimerdiole behandelt werden: **Fat Sci. Technol. 95 (1993) Nr.3, Seiten 91 - 94.** Im Rahmen der vorliegenden Erfindung sind diejenigen Dimerdiole bevorzugt, die einen Dimergehalt von mindestens 70% und insbesondere 90% aufweisen und bei denen die Zahl der C-Atome pro Dimermolekül überwiegend im Bereich von 36 bis 44 liegt.

Unter **Polyetherdiolen** werden im Rahmen der vorliegenden Erfindung Diole der allgemeinen Struktur HOCH₂-R²-CH₂OH verstanden, worin der Rest R² ein hydrophober Kohlenwasserstoffrest ist, der gesättigt oder ungesättigt, geradkettig oder verzweigt sein kann und gegebenenfalls auch aromatische Strukturelemente enthalten kann und bei dem zwingend ein oder mehrere CH₂-Einheiten jeweils durch ein Sauerstoffatom ersetzt sind.
Eine besonders attraktive Klasse von Polyetherdiolen ist durch Alkoxylierung von Alkandiolen wie 1,2-Ethandiol, 1,3-Propandiol, 1,2-Propandiol, 1,4-Butandiol, 1,3-Butandiol, 1,5-Pentandiol, 1,6-Hexandiol, 1,7-Heptandiol und 1,8-Octandiol, Polyoxytetramethylendiolen (Polytetrahydrofuranen) und Dimerdiolen zugänglich. Bei der Herstellung dieser alkoxylierten Diole geht man üblicherweise wie folgt vor: In einem ersten Schritt bringt man das gewünschte Diol mit Ethylenoxid und/oder Propylenoxid in Kontakt und setzt dieses Gemisch in Gegenwart eines alkalischen Katalysators und Temperaturen im Bereich von 20 bis 200 °C um. Auf diese Weise werden Anlagerungsprodukte von Ethylenoxid (EO) und/oder Propylenoxid (PO) an das eingesetzte Diol erhalten. Bei den Additionsprodukten handelt es sich mithin um EO-Addukte oder um PO-Addukte oder um EO/PO-Addukte an das jeweilige Diol; bei den EO/PO-Addukten kann dabei die Anlagerung von EO und PO statistisch oder blockweise erfolgen.

Unter **Polyesterdiolen** werden im Rahmen der vorliegenden Erfindung Diole der allgemeinen Struktur HOCH₂-R³-CH₂OH verstanden, worin der Rest R³ ein hydrophober Kohlenwasserstoffrest ist, der gesättigt oder ungesättigt, geradkettig oder verzweigt sein kann und gegebenenfalls auch aromatische Strukturelemente enthalten kann und bei dem zwingend ein oder mehrere CH₂-Einheiten jeweils durch eine COO-Einheit ersetzt sind. Zur Herstellung werden üblicherweise difunktionelle Polyole mit Dicarbonsäuren oder deren Anhydriden umgesetzt. Häufig verwendete Polyole sind Ethylenglykol, 1,2-Propandiol, 1,4-Butandiol, 1,6-Hexandiol. Übliche Dicarbonsäuren sind Bernsteinsäure, Adipinsäure, Phthalsäureanhydrid. Besonders bevorzugt sind dabei 1,6-Hexandiol-Adipinsäurepolyester.

**Dimethylcarbonat** wird bezüglich der Diole im Überschuß eingesetzt. Wie schon gesagt stellt man hierbei ein molares Verhältnis Dimethylcarbonat/Diol(en) im Bereich von 1,01:1 bis 5:1 ein, wobei der Bereich von 1,1:1 bis 1,5:1 bevorzugt ist.

Als **Katalysator** setzt man eine Titan-haltige Verbindung ein. Hierbei besteht hinsichtlich der chemischen Natur des Katalysators an sich keinerlei Einschränkung. Vorzugsweise setzt man als Katalysator Tetraalkylorthotitanate und insbesondere Tetrabutylorthotitanat ein. Vorzugsweise setzt man den Katalysator in einer Menge von 20 bis 2000 ppm ein. Unter der ppm-Angabe ist dabei ppm Titan bezogen auf die Gesamtmenge von Diol(en) und Dimethylcarbonat zu verstehen, die in Schritt a) und b) eingesetzt werden.

Die unter **Schritt d**) genannte Temperatur wird vorzugsweise auf einen Wert im Bereich von 195 bis 210 °C eingestellt. In der Regel wird man in Schritt d) bei dem sich einstellenden Druck arbeiten. Es kann aber auch gewünscht sein, den Druck zu reduzieren, vorzugsweise auf Werte unterhalb von 100 mbar.

In einer Ausführungsform des erfindungsgemäßen Verfahrens führt man wie oben bereits gesagt unmittelbar nach Schritt d) und vor Schritt e) den **Schritt** ∗) durch. Dieser Schritt ∗) gestattet die exakte und reproduzierbare Einstellung der Hydroxylzahl (OHZ) des Endproduktes auf einen gewünschten Wert. Dies ist von besonderer Bedeutung, weil üblicherweise die Kontrolle der Reaktion nicht so präzise gelingt, daß eine gewünschte enge Spezifikation bezüglich der OHZ erreicht wird. Die sichere Erreichung einer exakten OHZ ist jedoch für die Verwendung des nach dem erfindungsgemäßen Verfahren hergestellten Produktes für lineare Polyurethane von großer Bedeutung, weil auf diese Weise das Eigenschaftsprofil der dadurch zugänglichen Polyurethane genau kontrolliert werden kann. Man geht hierbei praktisch so vor, daß man nach Abschluß der Schritte a) bis d) eine Probe aus der Reaktionsmischung zieht, deren OHZ bestimmt (dies kann beispielsweise gemäß der klassischen Methode nach DGF C-V 17a erfolgen oder durch indirekte Methoden wie NIR-Spektroskopie oder Viskositätsmessungen), sodann die Differenz zur jeweils gewünschten OHZ des Endproduktes berechnet und als Ergebnis dieser Berechnung eine zusätzliche genau definierte Menge an Diol zudosiert. Diese Berechnungen sind für den Fachmann triviale stöchiometrische Berechnungen, so daß an dieser Stelle keine spezielle Rechenvorschrift zu nennen ist.

Die erfindungsgemäß hergestellten Verbindungen mit terminalen OH-Gruppen zeichnen sich insbesondere dadurch aus, daß sie bei der Umsetzung mit Diisocyanaten zu Polyurethanen mit einem sehr hohen Grad an Linearität führen. Dies wird durch Messung der Gelzeiten belegt.

Hierzu wird folgender **Gelzeit-Test** durchgerührt: Das zu untersuchende erfindungsgemäß hergestellte Polycarbonatdiol wird mit einem Polyisocyanat mit einer definierten mittleren NCO-Funktionalität im Bereich von 2,0 bis 2,5 (zum Beispiel mit Polymer-MDI technischer Qualität mit einer mittleren NCO-Funktionalität von 2,3) im Molverhältnis 1 : 1,1 in Kontakt gebracht und die Mischung mit einem Holzspatel kurz und kräftig verrührt. Die so hergestellte Mischung wird als TESTMIX bezeichnet. Damit führt man zweierlei Untersuchungen durch:
1. 100 g TESTMIX werden in einem Polyethylen-beschichteten 200-ml-Hartpapierbecher gegeben und dieser wird zwecks Wärmeisolierung in eine ausgeschäumte Form gestellt. Mittels eines "Gelation Timers" der Firma Techne wird nun die Gelzeit (in Minuten) bestimmt. Der hier ermittelte Wert wird als G1 bezeichnet.
2. 100 g TESTMIX werden 30 Minuten lang auf 200 °C im Wasserstrahlvakuum erhitzt. Die derart thermisch belastete Probe wird nun in einem Polyethylen-beschichteten 200-ml-Hartpapierbecher gegeben und dieser wird zwecks Wärmeisolierung in eine ausgeschäumte Form gestellt. Mittels eines "Gelation Timers" der Firma Techne wird nun die Gelzeit (in Minuten) bestimmt. Der hier ermittelte Wert wird als G2 bezeichnet.

Beim Gelzeit-Test führt man zur Ausschaltung statistisch bedingter Meßwert-Schwankungen bei einer Probe bezüglich der Parameter G1 und G2 jeweils mindestens zwei Messungen aus, und errechnet daraus die jeweiligen Mittelwerte von G1 und G2. Wie bereits oben gesagt sind die Werte für G1 und G2 nur im Bereich bis zu 300 Minuten zu bestimmen; sofern für G1 und/oder G2 Werte oberhalb 300 Minuten festgestellt werden, so wird hierfür einfach ">300 min" angegeben. Bei Werten ">300 min" wird zur Berechnung wie groß die prozentuale Abweichung von G2 im Hinblick auf G1 ist, jeweils von 300 min ausgegangen.

Der Gelzeit-Test ist eine Methode, um die Permanenz der in Schritt e) des erfindungsgemäßen Verfahrens durchgeführte Katalysator-Deaktivierung zu prüfen. Die durch das erfindungsgemäße Verfahren zugänglichen Verbindungen mit terminalen OH-Gruppen zeichnen sich im gerade beschriebenen Gelzeit-Test überraschend dadurch aus, daß der Meßwert G2 sich vom Meßwert G1 um maximal 20% und insbesondere um maximal 10% - bezogen auf den Meßwert G1 - unterscheidet. Es hat sich herausgestellt, daß das genannte Kriterium - daß nämlich der Meßwert G2 vom Meßwert G1 um maximal 20% abweicht - nur dann planmäßig und sicher erreicht wird, wenn die zur Deaktivierung des eingesetzten Titan-haltigen Katalysators eingesetzte Phosphorsäure in Form einer 1-20 Gew.%igen - und vorzugsweise 3-10 Gew.%-igen - wäßrigen Lösung eingesetzt wird und innerhalb der angegebenen Mengengrenzen eingesetzt wird. Weicht man hiervon ab, etwa indem man reine Phosphorsäure oder Phosphorsäure mit einer Konzentration von mehr als 20 Gew.-% in Wasser einsetzt, oder indem man außerhalb der angegebenen Mengengrenzen arbeitet, so resultieren höhere Abweichungen des Meßwertes G2 vom Meßwert G1, wodurch höhere Vernetzungsgrade und mithin eine geringerer Grad an Linearität des Polyurethans angezeigt werden. Hierzu sei auch auf den Beispielteil verwiesen.

Ein weiterer Gegenstand der Erfindung ist dementsprechend die Verwendung der Verbindungen mit terminalen OH-Gruppen, die erhältlich sind durch das Verfahren gemäß der vorliegenden Erfindung zur Herstellung von linearen Polyurethanen.

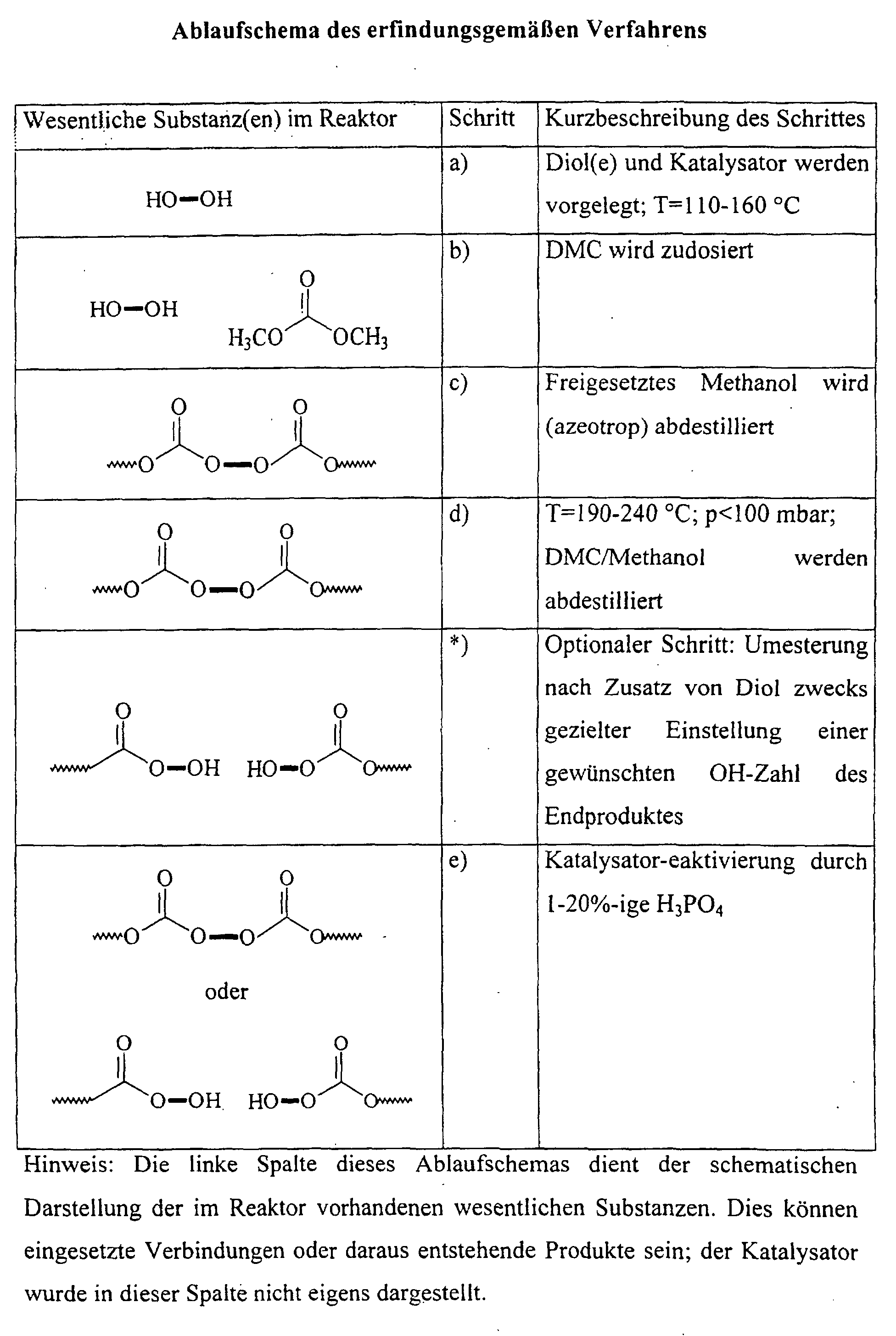

### Beispiele

### 1. Methoden

**Hydroxylzahl** (OHZ): Gemäß DGF C-V 17a

**Säurezahl** (SZ): Gemäß DGF C-V 2

**Viskosität:** Brookfield-Viskosimeter, Reinsubstanz, Spindel 21, 25°C)

**Gelzeit-Werte G1 und G2:** Bestimmung gemäß dem oben beschriebenen Gelzeit-Test; bei der Durchführung des Gelzeit-Tests wurde als Polyisocyanat "Desmodur VL" (ein Polymer-MDI technischer Qualität einer mittleren NCO-Funktionalität von 2,3 der Firma Bayer AG) eingesetzt

### 2. Abkürzungen und Handelsbezeichnungen

PolyTHF-250 = Polytetrahydrofuran mit einer OHZ von 479 (Fa. BASF)

Sovermol 908 = Dimerdiol mit einer OHZ von 205 (Fa. Henkel)

### 3. Herstellbeispiele

### Beispiel 1

918,0 kg (3920 mol) PolyTHF-250 wurden zusammen mit 1,37 kg Tetrabutylorthotitanat vorgelegt und unter sehr geringer Stickstoffzufuhr auf 140°C erhitzt. Unter Rühren wurden nun 440,0 kg (4885 mol) Dimethylcarbonat langsam zugegeben und gleichzeitig das durch die Reaktion bei dieser Temperatur gebildete Methanol abdestilliert. Dabei wurde ein auf 50 bis 60°C beheizter aufsteigender Kühler zwischengeschaltet, um Methanol von nicht umgesetzten Dimethylcarbonat zu trennen. Die Brüdentemperatur wurde durch die Zulaufgeschwindigkeit des Dimethylcarbonats reguliert und auf einen Wert im Bereich von 63 bis 65°C eingestellt. Nach ca. 3,5 Stunden war die gesamte Menge Dimethylcarbonat zudosiert. Nun wurde noch 0,5 Stunden bei 140°C gehalten, anschließend die Temperatur der Reaktionsmischung auf 200°C erhöht. Bei 200°C wurde nun eine Stunde lang destilliert, wobei die Brüdentemperatur deutlich abfiel. Die Destillatmenge zu diesem Zeitpunkt betrug ca. 320 kg. Nun wurde vorsichtig Vakuum angelegt und bei 200°C und 10 bis 15 mbar das restliche Dimethylcarbonat - insgesamt etwa 20 kg - entfernt. Man ließ auf 100°C abkühlen und hob das Vakuum mit Stickstoff auf, um eine Probe zur Bestimmung der Viskosität und der OH-Zahl zu entnehmen. Diese OHZ betrug 44. Nun wurde weiteres PolyTHF-250 in einer Menge von 28 kg zugesetzt und 0,5 Stunden bei 200°C umgeestert. Nun wurden abschließend zur Deaktivierung des Titan-Katalysators 8,0 kg einer 5 Gew.-%igen wäßrigen Lösung von Phosphorsäure zugegeben und 0,5 Stunden bei 100°C gerührt. Das Produkt wurde schließlich im Vakuum getrocknet. Man erhielt ca. 1000 kg einer trüben, farblosen bis schwach gelblich gefärbten Flüssigkeit.

### Kenndaten des Produktes:

- OHZ: = 54
- SZ: = 0,2
- Viskosität: = 9700 cps
- Gelzeit:: G1 > 300 min (Mittelwert aus zwei Messungen)
G2 > 300 min (Mittelwert aus zwei Messungen)
G2 weicht also von G1 nicht signifikant ab.

### Beispiel 2

947,0 kg (1730 mol) Sovermol 908 wurde vorgelegt und bei 120 bis 140 °C 1 Stunde bei 1-5 mbar getrocknet. Nach Zugabe von 1,13 kg Tetrabutylorthotitanat (3,32 mol) wurde unter sehr geringer Stickstoffzufuhr auf 140°C erhitzt. Unter Rühren wurden nun 187,0 kg (2076 mol) Dimethylcarbonat langsam zugegeben und gleichzeitig das durch die Reaktion bei dieser Temperatur gebildete Methanol abdestilliert. Nach ca. 3,5 Stunden war die gesamte Menge Dimethylcarbonat zudosiert. Nun wurde noch 0,5 Stunden bei 140°C gehalten, anschließend die Temperatur der Reaktionsmischung auf 200°C erhöht. Bei 200°C wurde nun eine Stunde lang destilliert, wobei die Brüdentemperatur deutlich abfiel. Nun wurde vorsichtig Vakuum angelegt und bei 200°C und 10 bis 15 mbar das restliche Dimethylcarbonat entfernt (Dauer: etwa eine Stunde). Die gesamte Destillatmenge betrug etwa 150 kg. Man ließ auf 100°C abkühlen und hob das Vakuum mit Stickstoff auf, um eine Probe zur Bestimmung der Viskosität und der OH-Zahl zu entnehmen. Diese OHZ betrug 50. Nun wurde weiteres Sovermol 908 in einer Menge von 38,44 kg zugesetzt und 0,5 Stunden bei 200°C umgeestert. Nun wurden abschließend zur Deaktivierung des Titan-Katalysators 6,51 kg einer 5 Gew.-%igen wäßrigen Lösung von Phosphorsäure im Laufe von 1 Stunde bei 100°C eingerührt, wobei starkes Schäumen auftrat. Das Produkt wurde schließlich im Vakuum getrocknet. Man erhielt ca. 1000 kg einer trüben, farblosen bis schwach gelblich gefärbten Flüssigkeit.

### Kenndaten des Produktes:

- OHZ: = 55
- SZ: = 0,2
- Viskosität: = 30300 cps
- Gelzeit:: G1 = 72,5 min (Mittelwert aus zwei Messungen)
G2 = 61,5 min (Mittelwert aus zwei Messungen)
G2 weicht also von G1 lediglich um 15,2% ab

### Vergleichsbeispiel 1a

Wie Beispiel 1, jedoch wurden zur Deaktivierung des Katalysators 1 Äquivalent einer 85 Gew.-%-igen wäßrigen Lösung von Phosphorsäure eingesetzt.
- Gelzeit:: G1 > 300 min (Mittelwert aus zwei Messungen)
- G2 =: 90 min (Mittelwert aus zwei Messungen)
G2 weicht also von G1 signifikant ab

### Vergleichsbeispiel 1b

Wie Beispiel 1, jedoch wurden zur Deaktivierung des Katalysators 0,3 Äquivalente einer 1 Gew.-%-igen wäßrigen Lösung von Phosphorsäure eingesetzt.
- Gelzeit:: G1 > 300 min (Mittelwert aus zwei Messungen) G2 = 30 min (Mittelwert aus zwei Messungen)
G2 weicht also von G1 signifikant ab

## Patentansprüche

1. Verfahren zur Herstellung von Verbindungen mit terminalen OH-Gruppen, wobei man Diole mit terminalen CH₂OH-Gruppen in Gegenwart eines Katalysators mit Dimethylcarbonat umsetzt, das dabei freigesetzte Methanol kontinuierlich abdestilliert und anschließend den eingesetzten Katalysator deaktiviert, **dadurch gekennzeichnet, daß** man
a) ein oder mehrere Diole mit terminalen CH₂OH-Gruppen zusammen mit einem Titan-haltigen Katalysator vorlegt und diese Mischung auf eine Temperatur im Bereich von 110 bis 160°C erhitzt,
b) bei dieser Temperatur Dimethylcarbonat kontinuierlich zudosiert, wobei man ein molares Verhältnis Dimethylcarbonat/Diol(en) im Bereich von 1,01:1 bis 5:1 einstellt und
c) das bei der Reaktion freigesetzte Methanol kontinuierlich abdestilliert, wobei man beim Abdestillieren ein molares Verhältnis Methanol/Dimethylcarbonat im Bereich von 0,5:1 bis 99:1 einstellt,
d) sobald kein Methanol mehr freigesetzt wird, auf eine Temperatur im Bereich von 190 bis 240 °C erhitzt und dann bei dieser Temperatur und einem Druck unterhalb von 100 mbar Methanol/Dimethylcarbonat entfernt
e) und schließlich den Katalysator durch Zugäbe von 0,8 bis 2 Äquivalenten Phosphorsäure - bezogen auf den eingesetzten Katalysator - bei einer Temperatur im Bereich von 80 bis 120°C deaktiviert, wobei man die Phosphorsäure in Form einer 1 bis 20 Gew.-%igen wäßrigen Lösung einsetzt.

2. Verfahren nach Anspruch 1, wobei man unmittelbar nach Schritt d) und vor Schritt e) weiteres Diol - dasselbe wie in a) - in einer molaren Menge zudosiert, die auf die gewünschte einzustellende OHZ des Endproduktes berechnet ist und eine weitere Umesterung bei einer Temperatur im Bereich von 160 bis 240 °C durchführt.

3. Verfahren nach Anspruch 1 oder 2, wobei man solche Diole a) einsetzt, deren mittleres Molekulargewicht Mn im Bereich von 118 bis 1000 liegt.

4. Verfahren nach einem der Ansprüche 1 bis 3, wobei man die Diole a) auswählt aus der Klasse der Alkandiole, Polyetherdiole und Polyesterdiole.

5. Verfahren gemäß einem der Ansprüche 1 bis 4, wobei man unter d) eine Temperatur im Bereich von 195 bis 210 °C einstellt.

6. Verfahren gemäß einem der Ansprüche 1 bis 5, wobei man als Katalysator Tetrabutylorthotitanat einsetzt.

7. Verfahren zur Herstellung von linearen Polyurethanen, **dadurch gekennzeichnet, dass** man zunächst gemäß dem Verfahren nach einem der Ansprüche 1-6 Verbindungen mit terminalen OH-Gruppen herstellt und diese Verbindungen auf übliche Weise mit Polyisocyanaten umsetzt.

## Claims

1. A process for the production of OH-terminated compounds in which CH₂OH-terminated diols are reacted with dimethyl carbonate in the presence of a catalyst, the methanol released is continuously distilled off and the catalyst used is then deactivated, **characterized in that**
a) one or more CH₂OH-terminated diols is/are initially introduced into a reactor together with a titanium-containing catalyst and the resulting mixture is heated to a temperature of 110 to 160°C,
b) dimethyl carbonate is continuously added at that temperature, a molar ratio of dimethyl carbonate to diol(s) of 1.01:1 to 5:1 being adjusted, and
c) the methanol released during the reaction is continuously distilled off, a molar ratio of methanol to dimethyl carbonate of 0.5:1 to 99:1 being established during distillation,
d) when no more methanol is released, the reaction mixture is heated to a temperature of 190 to 240°C and methanol/dimethyl carbonate is then removed at that temperature under a pressure below 100 mbar and
e) finally the catalyst is deactivated by addition of 0.8 to 2 equivalents of phosphoric acid - based on the catalyst used - at a temperature of 80 to 120°C, the phosphoric acid being used in the form of a 1 to 20% by weight aqueous solution.

2. A process as claimed in claim 1, **characterized in that** more diol - the same as in a) - is added immediately after step d) and before step e) in a molar quantity which is calculated on the basis of the required OH value to be adjusted in the end product and a further transesterification is carried out at a temperature of 160°C to 240°C.

3. A process as claimed in claim 1 or 2, **characterized in that** diols a) with an average molecular weight Mn of 118 to 1,000 are used.

4. A process as claimed in any of claims 1 to 3, **characterized in that** the diols a) are selected from the class of alkanediols, polyetherdiols and polyesterdiols.

5. A process as claimed in any of claims 1 to 4, **characterized in that** a temperature of 195 to 210°C is established in d).

6. A process as claimed in any of claims 1 to 5, **characterized in that** tetrabutyl orthotitanate is used as the catalyst.

7. A process for the production of linear polyurethanes, **characterized in that** OH-terminated compounds are initially produced by the process claimed in any of claims 1 to 6 and are then reacted with polyisocyanates in the usual way.

## Revendications

1. Procédé de préparation de composés à groupes OH terminaux dans lequel on fait réagir des diols ayant des groupes CH₂OH terminaux en présence d'un catalyseur avec du carbonate de diméthyle, on distille de façon continue le méthanol alors libéré, puis on désactive le catalyseur utilisé,
**caractérisé en ce que**
a) on dispose un ou plusieurs diols à groupes CH₂OH terminaux avec un catalyseur contenant du titane, et on chauffe ce mélange à une température allant de 110 à 160 °C.
b) on dose de façon continue le carbonate de diméthyle à cette température, en établissant un rapport molaire carbonate de diméthyle au(x) diol(s) allant de 1.01:1 à 5:1, et
c) on distille de façon continue le méthanol libéré dans la réaction, et l'on établit lors de la distillation un rapport molaire méthanol/carbonate de diméthyle allant de 0,5:1 à 99:1.
d) dès qu'il n'est plus libéré de méthanol, on chauffe à une température allant de 190 à 240 °C, puis on retire le méthanol/carbonate de diméthyle à cette température et à une pression inférieure à 100 mbar,
e) et enfin, on désactive le catalyseur par addition de 0.8 à 2 équivalents d'acide phosphorique - par rapport au catalyseur employé - à une température allant de 80 à 120 °C, en utilisant l'acide phosphorique sous la forme d'une solution aqueuse à 1 à 20 % en poids.

2. Procédé selon la revendication 1, dans lequel immédiatement après l'étape d) et avant l'étape e), on ajoute une quantité supplémentaire de diol - le même qu'en a) - en une quantité molaire calculée en relation avec l'IOH du produit final désiré à établir, et on réalise ensuite une estérification à une température allant de 160 à 240 °C.

3. Procédé selon la revendication 1 ou 2, dans lequel on utilisé des diols a) dont le poids moléculaire moyen Mn se situe dans un intervalle allant de 118 à 1000.

4. Procédé selon l'une des revendications 1 à 3, dans lequel on choisit les diols a) dans la classe des alcanediols, polyétherdiols et polyesterdiols.

5. Procédé selon l'une des revendications 1 à 4, dans lequel en d) on établit une température allant de 195 à 210 °C.

6. Procédé selon l'une des revendications 1 à 5, dans lequel on utilise comme catalyseur l'orthotitanate de tétrabutyle.

7. Procédé de préparation de polyuréthanes linéaires,
**caractérisé en ce qu'**
on prépare tout d'abord selon le procédé d'une des revendications 1 à 6 des composés à groupes OH terminaux, puis **en ce qu'**on fait réagir ces composés de manière habituelle avec des polyisocyanates.
